# EUROPEAN PATENT APPLICATION

(11) **EP 2 620 965 A1**
(43) Date of publication of application: **31.07.2013**
(21) Application number: 12152462.3
(22) Date of filing: 25.01.2012
(51) Int. Cl.: H01G 11/18

(54) **Supercapacitors assembly with extended lifetime by heat and charging/discharging protection management of said supercapacitors**

(71) Applicant: Volvo Car Corporation, 40531 Göteborg (SE)
(72) Inventor: Midholm, Daniel, 41322 Göteborg (SE); Larsson, Torbjörn, 414 62 Göteborg (SE); Ulmhage, Fredrik, 41320 Göteborg (SE)
(74) Representative: Widahl, Jenny Marie

(57) **Abstract**

A method for protecting and increasing the lifetime of super capacitor (1) in an unit assembly which comprises monitoring the charge level of the capacitor (1), monitoring the temperature of the capacitor (1), discharging the capacitor (1) when the temperature is above a predetermined level, or discharging the capacitor (1) down to a predetermined level when the capacitor (1) has stayed charged over said level longer than a predetermined period, and directing the discharged power from the capacitor (1) to a cooling device (2) for cooling the super capacitor (1). Also, a super capacitor system (3) comprises at least one super capacitor (1), a control unit (4), and means (5) for monitoring the temperature and the charge level of the capacitor (1). The system (3) further comprises a cooling device (2) connected to the super capacitor (1) for cooling the super capacitor (1).

## Description

### FIELD OF THE INVENTION

The present invention relates to a method and a super capacitor system that monitors the charge level of the capacitor and the temperature of the capacitor and where this information is handled by a control unit.

### BACKGROUND

A super capacitor, also known as ultra capacitor or double-layer capacitor, differs from a regular capacitor in that it has a very high capacitance. A capacitor stores energy by means of a static charge as opposed to an electrochemical reaction. Applying a voltage differential on the positive and negative plates charges the capacitor. This is similar to the build up of electrical charge when walking on a carpet. Touching an object releases the energy through the finger.

In 1957 engineers started experimenting with an electric double-layer capacitor, which led to the development of an early type of super capacitor. There were no known commercial applications then. In 1966, engineers rediscovered the effect of the double-layer capacitor by accident while working on experimental fuel cell designs. In 1978 the technology was marketed as "super capacitor" for computer memory backup. It was not until the 1990s that advances in materials and manufacturing methods led to improved performance and lower cost.

The modern super capacitor is not a battery per se but crosses the boundary into battery technology by using special electrodes and electrolyte. Several types of electrodes have been tried.

All capacitors have voltage limits. A higher level of voltages is possible but the service life is then generally reduced. To achieve higher voltages, several super capacitors are connected in series. However, this has disadvantages. For instance, serial connection reduces the total capacitance, and strings of more than three capacitors require voltage balancing to prevent any cell from going into over-voltage. This is similar to the protection circuit in lithium-ion batteries.

The specific energy of the super capacitor is low and ranges from 1 to 30Wh/kg. Although high compared to a regular capacitor, 30Wh/kg is one-fifth that of a consumer Li-ion battery. The discharge curve is another disadvantage. Whereas the electrochemical battery delivers a steady voltage in the usable power band, the voltage of the super capacitor decreases on a linear scale from full to zero voltage. This reduces the usable power spectrum and much of the stored energy is left behind.

Rather than operating as a stand-alone energy storage device, super capacitors work well as low-maintenance memory backup to bridge short power interruptions. Super capacitors have also made critical inroads into electric powertrains. The virtue of ultra-rapid charging and delivery of high current on demand makes the super capacitor an ideal candidate as a peak-load enhancer for hybrid vehicles, as well as fuel cell applications.

The charge time of a super capacitor is about 10 seconds. The charge characteristic is similar to an electrochemical battery and the charge current is, to a large extent, limited by the charger. The initial charge can be made very fast, and the topping charge will take extra time. Provision must be made to limit the initial current inrush when charging an empty super capacitor. The super capacitor cannot go into overcharge and does not require full-charge detection; the current simply stops flowing when the capacitor is full.

The super capacitor can be charged and discharged virtually an unlimited number of times. Unlike the electrochemical battery, which has a defined cycle life, there is little wear and tear by cycling a super capacitor. Nor does age affect the device, as it would a battery. Under normal conditions, a super capacitor fades from the original 100 percent capacity to 80 percent in 10 years. Applying higher voltages than specified shortens the life. Also, staying fully charged for a longer time also decreases the life as well as too high temperatures.

CN 101076240 A discloses a battery or a super capacitor. It features radiating fins covering said battery and super capacitor where both ends of the battery or super capacitor are uncovered. A plurality of batteries or super capacitors is combined to form a battery pack compartment or super capacitor compartment. The radiating fins can be used to cool the batteries or capacitors.

CN 101357592 A discloses a drive vehicle-type energy for motor wheel-drive vehicles and an electric vehicle and drive control system, pertaining to the field of vehicle-type power and electrical control technology. The vehicle-type power storage part is arranged in an anti-explosion box which comprises super capacitor cells in serial and parallel connection wherein the anti-explosion boxes are in serial connection. It further comprises a pressure detecting and monitoring system, a temperature detecting and monitoring system, an energy equilibrium management system, an air-conditioner radiating channel and an anti-explosion wiring plug. An electric cabinet is included and the vehicle-type energy is connected with a DC motor chopping control assembly, a hydraulic system control electric assembly, an air pump frequency conversion unit, an air-conditioning frequency conversion unit, a cab defrosting electric system and DC-DC power. The advantages are significant energy saving effect, obvious environmental protection and discharge reduction, high-efficiency regenerative braking energy feedback and storage, fuel independence, rapid charging speed, great reduction of equipment fault rate, low maintenance cost and long service life.

WO 2007/018778 A1 discloses a storage controller that has a capacitor pack for storing energy to supply power during a main power loss, a temperature sensor that senses the capacitor pack temperature, and a CPU which detects that the temperature of the capacitor pack has risen above a predetermined threshold while operating at a first voltage value and determines whether a projected lifetime of the capacitor pack is less than the warranted lifetime. If the projected lifetime is less than the warranted lifetime, the CPU reduces the operating voltage of the capacitor pack to a second value in order to increase the capacitor pack lifetime. In one embodiment, the CPU reduces the voltage if an accumulated normalized running time of the capacitor pack is greater than an accumulated calendar running time. In another embodiment, the CPU reduces the voltage if a percentage capacitance drop of the capacitor pack is greater than a calendar percentage capacitance drop.

Super capacitors are expensive in terms of cost per watt. However, super capacitors and chemical batteries are not in competition; rather they are different products serving unique applications.

### SUMMARY OF THE INVENTION

The object of the present invention is to provide a method and a system for improving the life time of a super capacitor.

This object is achieved with a method and a system as set forth in the appended claims.

According to the present invention a method for protecting a super capacitor is provided. The method comprises monitoring the charge level of the capacitor, monitoring the temperature of the capacitor, discharging the capacitor when the temperature is above a predetermined level, or discharging the capacitor down to a predetermined level when the capacitor has stayed charged over said level longer than a predetermined period, and directing the discharged power from the capacitor to a cooling device for cooling the super capacitor.

Thus, in order to increase the life time of the capacitor the "top" charge power is used to cool down the capacitor. Alternatively, if the temperature of the capacitor is considered too high the power stored in the capacitor is used to cool down the capacitor no matter if the capacitor is not fully charged.

A super capacitor system performing the above method comprises at least one super capacitor, a control unit, and means for monitoring the temperature and the charge level of the capacitor. Further, it comprises a cooling device connected to the super capacitor for cooling the super capacitor. The cooling device could be any of several alternatives.

According to one aspect of the present invention the discharged power from the capacitor is fed to a fan. Preferably, the fan is comprised in the super capacitor system. More preferably, the fan is a DC fan which works well with the power from the capacitor. A further advantage of a DC fan over an AC fan is the longer life span since a DC fan requires less power and thus does not get as warm as an AC fan. The higher the temperature of a fan, the shorter the life span. Also, a DC fan is probably the least costly today existing cooling device for this application.

According to a further aspect of the present invention the temperature sensor is a contact temperature sensor. Sensors of this type are generally very accurate. Contact temperature sensors measure their own temperature. One infers the temperature of the object to which the sensor is in contact by assuming or knowing that the two are in thermal equilibrium, that is, there is no heat flow between them.

According to an alternative aspect of the present invention the temperature sensor is a non-contact temperature sensor. Non-contact temperature sensors include many different types, but all share one set of unique features: they are often involved with an optical property of materials called spectral emissivity or spectral emittance.

They all function, or are based on, the same law of physics, Planck's Law of the thermal emission of radiation. Thus, there is no need for thermal equilibrium between the sensor and object of measurement to obtain a temperature measurement as is necessary in the case of contact sensors. There are various names used, for instance, IR thermometer, radiation thermometer, IR pyrometer, infrared thermometer, spot thermometer, spot radiometer, line scanner, radiation pyrometer, single waveband pyrometer, dual waveband pyrometer, ratio pyrometer, two colour thermometer, two colour pyrometer, radiometer, spectral radiometer, IR thermocouple, total radiation pyrometer, fiber optic pyrometer, disappearing filament pyrometer, quantitative thermal imager, dfp, optical pyro, and multi wavelength pyrometer.

A further alternative of measuring the temperature could be by monitoring the resistance through the super capacitor.

Strictly speaking, it is a radiation thermometer that measures thermal radiation in a narrow spectral region of the visual portion of the Electromagnetic Spectrum near 0.65 µm.

For improving the cooling the super capacitor system according to a further aspect of the invention could comprise a housing having at least two super capacitors, and wherein the housing further preferably have at least one air inlet and one air outlet. The housing improves the possibilities of a better air distribution around the capacitors and thus a more efficient cooling. The inside structure of the housing in combination with the shape of the capacitors can be designed such that air channels are created to provide for an even air flow distribution.

According to yet another aspect of the present invention a fan is arranged at the air inlet. An advantage is that there will be a slight over pressure inside the housing which means that it is not possible for contaminated air to "leak" into the housing, only the air that passes the fan which of course could be filtered if the ambient air should be heavily contaminated with particles.

An alternative is to have a fan arranged at the air outlet, so called exhaust air ventilation or cooling. A still further alternative is to have a fan at both the inlet and the outlet.

### BRIEF DESCRIPTION OF THE DRAWINGS

The invention will now be further disclosed with reference to the accompanying drawings.
Figure 1 shows a basic build up of a capacitor bank with super capacitors according to the present invention.
Figure 2 shows a basic circuit lay out for the cooling device.

### DISCLOSURE OF PREFERRED EMBODIMENTS

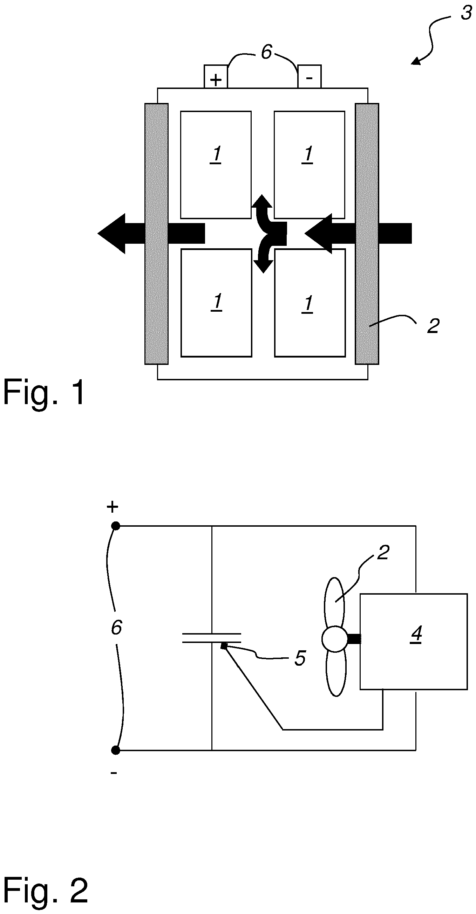

Figure 1 shows a capacitor bank or a super capacitor system 3. The bank is in the drawing shown with four super capacitors 1 and a fan 2. The arrows shows the air flow direction through the bank. Further, there are vehicle connections 6.

In figure 2 can be seen a fan 2 as well as a fan motor, in this embodiment the fan motor is combined with the control unit 4. In the embodiment shown a temperature sensor 5 signals the control unit 4 when to start the fan motor 4 and thus the fan 2.

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, in figure 1 there are four super capacitors shown, the super capacitor system according to the present invention could have any number of capacitors.

## Claims

1. A method for protecting a super capacitor (1) comprising,
monitoring the charge level of the capacitor (1),
monitoring the temperature of the capacitor (1),
discharging the capacitor (1) when the temperature is above a predetermined level, or
discharging the capacitor (1) down to a predetermined level when the capacitor (1) has stayed charged over said level longer than a predetermined period, and
directing the discharged power from the capacitor (1) to a cooling device (2) for cooling the super capacitor (1).

2. A method according to claim 1, wherein the discharged power from the capacitor (1) is fed to a fan (2).

3. A super capacitor system (3), comprising at least one super capacitor (1), a control unit (4), and means (5) for monitoring the temperature and the charge level of the capacitor (1),
**characterised in**
**that** the system (3) further comprises a cooling device (2) connected to the super capacitor (1) for cooling the super capacitor (1).

4. A super capacitor system (3) according to claim 3, wherein the cooling device comprises a fan (2).

5. A super capacitor system (3) according to any of the claims 3 and 4,
wherein the temperature sensor (5) is a contact temperature sensor.

6. A super capacitor system (3) according to any of the claims 3 and 4,
wherein the temperature sensor (5) is a non-contact temperature sensor.

7. A super capacitor system (3) according to any of the claims 3 to 6,
wherein the system (3) comprises a housing having at least two super capacitors (1), the housing further having at least one air inlet and one air outlet.

8. A super capacitor system (3) according to claim 7, wherein a fan (2) is arranged at the air inlet.

9. A super capacitor system according to claim 7 or 8, wherein a fan is arranged at the air outlet.
